# EUROPÄISCHE PATENTSCHRIFT

(11) **EP 0 798 202 B1**
(45) Veröffentlichungstag und Bekanntmachung des Hinweises auf die Patenterteilung: **10.11.1999**
(21) Anmeldenummer: 97103265.1
(22) Anmeldetag: 27.02.1997
(51) Int. Cl.: B62M 19/00, B62M 23/00

(54) **Motorrad mit kraftregelbarem Vorderradantrieb (Allradantrieb)**
Motorcycle with front wheel drive
Motocyclette à roue avant motrice

(30) Priorität: 02.03.1996 DE 19608124
(43) Veröffentlichungstag der Anmeldung: 01.10.1997
(73) Patentinhaber: Hieble, Siegfried, 88167 Grünbach (DE)
(72) Erfinder: Hieble, Siegfried, 88167 Grünbach (DE)
(74) Vertreter: Kiessling, Christian

(56) Entgegenhaltungen:
- DE-A- 2 846 741
- DE-A- 3 522 068
- DE-A- 4 208 657
- FR-A- 2 556 305
- FR-A- 2 623 157
- FR-A- 2 677 319

## Beschreibung

Die Erfindung betrifft ein Motorrad mit einem nicht-lenkbaren Hinterrad, mit einem einen Antriebsmotor aufweisenden Antriebsaggregat, das das Hinterrad antreibt, mit einem lenkbaren Vorderrad, wobei das Antriebsaggregat mittels einer Kraftübertragungseinrichtung mit dem Vorderrad für dessen Antrieb verbunden ist und die Kraftübertragungseinrichtung einen hydrostatischen Antrieb aufweist, dessen Hydraulikpumpe vom Antriebsmotor des Antriebsaggregats angetrieben wird und dessen Hydraulikmotor an einem Holm (Gabelholm) der Vordergabel angeordnet ist.

Motorräder der eingangs genannten Art sind beispielsweise aus 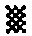 PS - Die Motorrad Zeitung'', Heft 9, 1976, Seiten 10 bis 12 bekannt.

An beiden Rädern angetriebene Motorräder haben den Vorteil, daß mit ihnen schweres, sumpfiges, unwegsames, schneebedecktes und dgl. Gelände leichter befahren werden kann, wobei die Gefahr des Steckenbleibens sehr gering ist. Der beidrädrige Antrieb konnte sich bei Motorrädern bisher nicht durchsetzen, da sie in ihrem Bau sehr kompliziert sind, was meistens viel zusätzliches Gewicht bedeutet und sie in den Herstellungskosten sehr teuer waren.

Das größte Handicap war bisher jedoch, daß bei eingeschaltetem Vorderradantrieb beim Durchrutschen des Hinterrades auch das Vorderrad mit durchrutschte und somit die Lenkbarkeit und sicheres Fahren nicht mehr gewährleistet waren.

Um dieses Problem zu lösen, ist im Stand der Technik (DE 28 46 741 A1) vorgeschlagen worden, ein Motorrad mit einer Kraftübertragungseinrichtung zu versehen, die durch einen hydrostatischen Antrieb gebildet ist, dessen Hydraulikpumpe von dem Antriebsmotor antreibbar ist, und dessen Hydraulikmotor an der Nabe des Vorderrades angeordnet ist, wobei die Förderleistung der Hydraulikpumpe einstellbar ist.

Der Erfindung liegt die Aufgabe zugrunde, ein an beiden Rädern antreibbares Motorrad zu schaffen, welches gegenüber einem herkömmlichen, am Hinterrad angetriebenen Motorrad außer zusätzlichem Gewicht keine nennenswerten Nachteile aufweist.

Für ein Motorrad der eingangs genannten Art wird diese Aufgabe dadurch gelöst, daß eine Hydraulikpumpe mit konstanter Förderleistung vorgesehen ist, der Hydraulikmotor die gleiche konstante Schluckleistung aufweist wie die Hydraulikpumpe, die von der Hydraulikpumpe geförderte Hydraulikflüssigkeit durch eine Druckleitung über ein Druckregelventil geleitet wird, das durch ein Verstellelement (Drehgriff) stufenlos auf ca. 20 bis 200 bar einstellbar ist, und zwischen Öldruckleitung zum Hydraulikmotor und Rückleitung ein Freilauf- oder Rückschlagventil vorgesehen ist, das ein Frei- oder Vorlaufen des Vorderrades ermöglicht, wobei das Vorderrad im Normalbetrieb 1 % bis 3 % langsamer läuft als das Hinterrad und sich der Hydraulikmotor das zusätzliche Öl durch das Freilauf- oder Rückschlagventil holt und bei einem Betrieb, bei dem das Hinterrad mehr als 1 % bis 3 % durchrutscht, sich das Ventil schließt.

Bevorzugte Ausgestaltungen der Erfindung sind Gegenstand der Unteransprüche.

Das erfindungsgemäße Motorrad weist eine Hydraulikpumpe mit konstanter Förderleistung und einen Hydraulikmotor mit konstanter Schluckleistung auf. Eine Hydraulikpumpe mit konstanter Förderleistung bietet den Vorteil, daß sie kostengünstig hergestellt werden kann und leicht zu warten ist, und außerdem aufgrund einer einfachen Bauweise klein und leicht gehalten werden kann. Ihr Einsatz wird erfindungsgemäß ermöglicht durch das Zusammenspiel mit einem Hydraulikmotor mit konstanter und gleicher Leistung.

Das erfindungsgemäße Motorrad weist weiterhin das Merkmal auf, daß die von der Hydraulikpumpe geförderte Hydraulikflüssigkeit durch eine Druckleitung über ein Druckregelventil geleitet wird, das durch ein Verstellelement stufenlos von 20 bis 200 bar einstellbar ist. Durch diese Merkmale wird erreicht, das eine Überlastung der Hydraulikpumpe und des Hydraulikmotors wirksam verhindert wird.

Weiterhin weist das erfindungsgemäße Motorrad das Merkmal auf, daß mit dem Freilauf- oder Rückschlagventil die Drehzahl des Vorderrades im Normalbetrieb 1 % bis 3 % niedriger als dasjenige des Hinterrades eingestellt ist. Dadurch wird ein verbessertes Fahrverhalten im Kurvenbetrieb erreicht.

Bei dem erfindungsgemäßen Motorrad steht die Hydraulikpumpe vorzugsweise über ein Zwillingskettenrad mit dem Antriebsaggregart oder dem Hinterrad dauernd in Verbindung. Dadurch wird erreicht, daß der Antrieb dauernd mitläuft, die Übersetzungen ohne größere Anstrengungen geändert werden können (sehr wichtig im Geländesport) und die gesamte Anlage ohne sehr große Veränderungen am Serienmotorrad angebaut werden kann.

Bei dem erfindungsgemäßen Motorrad kann der Antrieb der Hydraulikpumpe über ein Kettenrad erfolgen, das auf der Kardanwelle angebracht ist. Alternativ kann der Antrieb der Hydraulikpumpe als Direktantrieb über ein Zahnrad erfolgen.

Der Hydraulikmotor des erfindungsgemäßen Motorrades ist vorzugsweise an einem Gabelholm montiert und über eine Kette mit einem am Vorderrad befestigten Kettenrad verbunden und treibt so das Vorderrad an.

Das erfindungsgemäße Motorrad wird im folgenden anhand bevorzugter Ausführungsformen erläutert, die in den Figuren der Zeichnung dargestellt ist. Es zeigen:
- Fig. 1: eine erste bevorzugte Ausführungsform des erfindungsgemäßen Motorrades;
- Fig. 2: eine zweite bevorzugte Ausführungsform des erfindungsgemäßen Motorrades.

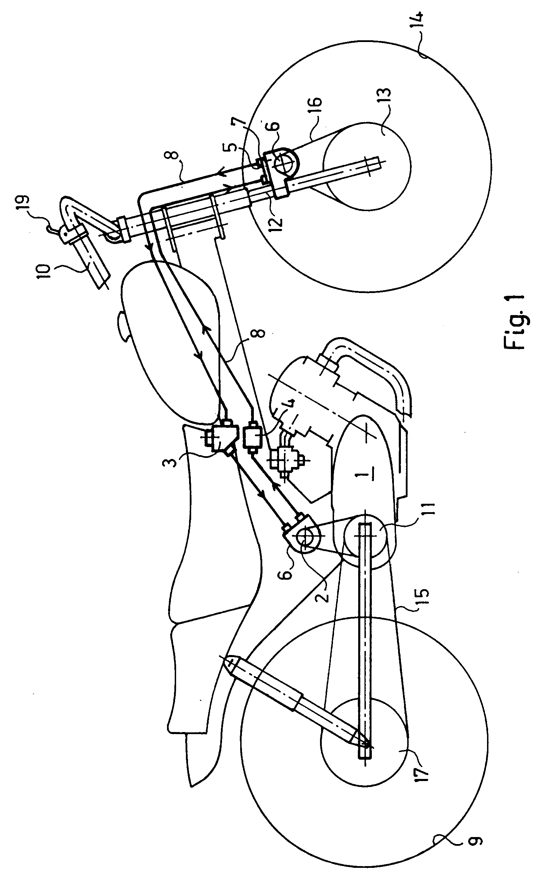

Bei dem in Fig. 1 dargestellten erfindungsgemäßen Motorrad ist eine Hydraulikpumpe 2 über ein Kettenrad 11 mit einem Antriebsmotor 1 des Motorrades verbunden und wird darüber angetrieben. Das Motorrad weist ein nicht-lenkbares Hinterrad 9 auf, mit einem einen Antriebsmotor 1 aufweisenden Antriebsaggregat, das das Hinterrad 9 antreibt, und ein lenkbares Vorderrad 14, wobei das Antriebsaggregat mittels einer Kraftübertragungseinrichtung 5 mit dem Vorderrad 14 für dessen Antrieb verbunden ist. Die Kraftübertragungseinrichtung 5 weist einen hydrostatischen Antrieb auf, dessen Hydraulikpumpe 2 vom Antriebsmotor 1 des Antriebsaggregats angetrieben wird und dessen Hydraulikmotor 6 an einem Holm (Gabelholm 12) der Vordergabel angeordnet ist. Eine Hydraulikpumpe 2 mit konstanter Förderleistung ist vorgesehen, wobei der Hydraulikmotor 6 die gleiche konstante Schluckleistung aufweist wie die Hydraulikpumpe. Die von der Hydraulikpumpe 2 geförderte Hydraulikflüssigkeit wird durch eine Druckleitung 8 über ein Druckregelventil 4 geleitet, das durch ein Verstellelement (Drehgriff 10) stufenlos auf ca. 20 bis 200 bar einstellbar ist. Zwischen der Öldruckleitung 8 zum Hydraulikmotor 6 und der Rückleitung ist ein Freilauf- oder Rückschlagventil 7 vorgesehen, das ein Frei- oder Vorlaufen des Vorderrades ermöglicht, wobei das Vorderrad im Normalbetrieb 1 % bis 3 % langsamer läuft als das Hinterrad und sich der Hydraulikmotor 6 das zusätzliche öl durch das Freilauf- oder Rückschlagventil 7 holt, wobei bei einem Betrieb, bei dem das Hinterrad mehr als 1 % bis 3 % durchrutscht, sich das Ventil 7 schließt.

Die Kraft, mit der das Vorderrad 14 angetrieben wird (vom leichten Mitziehen bis zur vollen Kraftübertragung) ist durch einen gut erreichbaren, am besten an der linken Lenkerhälfte angebrachten stufenlosen Verstellhebel 19, der durch einen Doppelbowdenzug mit dem Druckregelventil 4 verbunden ist oder durch einen Drehgriff 10, wie er sinngemäß auf der rechten Seite zum Gasgeben angebracht ist, für jeden Geländeabschnitt oder Straßenabschnitt ohne Anstrengung und Loslassen des Lenkers eingestellt werden kann. Das Druckregelventil 4 kann auch elektronische Verstellung haben, dann reicht ein Wippschalter 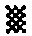 +'' oder 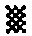 -'' an der Armatur der linken Lenkerhälfte, wobei der Drehgriff 10 im praktischen das Beste ist, da die rechte Hand sowieso um diesen greift, um den Lenker festzuhalten und bei wechselnder Bodenbeschaffung im Bruchteil einer Sekunde die Antriebskraft am Vorderrad reduziert und wieder verstärkt werden kann. Sehr wichtig ist, daß damit der Bodenkontakt durch Durchrutschen des Vorderrades und somit die Lenkbarkeit und Sicherheit im Fahrbetrieb nicht leidet.

Das erfindungsgemäße Motorrad läßt sich wie ein normales Motorrad mit Hinterradantrieb fahren da die Übersetzung des Vorderrades so gewählt wird, daß es 1 bis 3 % langsamer als das Hinterrad läuft, also nachläuft. Da aber bei diesen Umständen der Antriebsmotor 6 mehr Öl schluckt als die Pumpe 2 liefert, holt er sich das fehlende Öl ohne Kraftaufwand durch das Freilauf- oder Rückschlagventil 7 aus der Rücklaufleitung. Der gleiche Vorgang ermöglicht auch das Kurvenfahren wie bei einem normal vom Hinterrad angetriebenen Motorrad. Sollte jedoch das Hinterrad mehr als 1 bis 3 % durchrutschen, schließt sich das Ventil 7 und das Vorderrad zieht, je nach Bodenbeschaffenheit und vorgewählter Kraft am Druckregelventil 4 mit.

Bei einem normalen über das Hinterrad angetriebenen Motorrad ist am Vorderrad auf der einen Seite eine Bremsscheibe und die dazugehörige Bremszange an stabilen Ösen am Gabelholm rechts montiert.

Auf der linken Seite des Vorderrades ist ein Antriebskettenrad 13 montiert und am Gabelholm links ist in gleicher Höhe wie die Bremszange an zwei stabilen Langlochösen (zum Kettenspannen oder andere Kettenspannvorrichtung) der Hydraulikmotor 6 für den Vorderradantrieb befestigt wird.

Durch diese einfache Anbringung besteht die Möglichkeit, durch Wechseln des Zwillingskettenrades (-kettenantriebsritzels) 11 am Antriebsaggregat und am Hydraulikmotor 6 des Vorderradantriebes die Übersetzung zu ändern, was z.B. bei verschiedenen Geländerennen sehr wichtig ist.

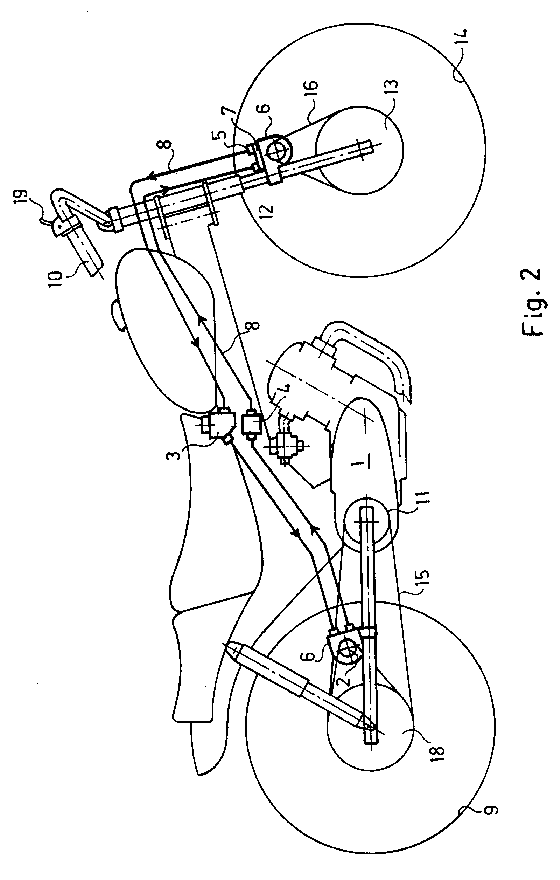

Bei der in Fig. 2 dargestellten Ausführungsform des erfindungsgemäßen Motorrades ist die Hydraulikpumpe 2 an der Hinterradschwinge befestigt und über ein Zwillings-Antriebskettenrad 18 montiert.

## Patentansprüche

1. Motorrad mit einem nicht-lenkbaren Hinterrad (9), mit einem einen Antriebsmotor (1) aufweisenden Antriebsaggregat, das das Hinterrad (9) antreibt, mit einem lenkbaren Vorderrad (14), wobei das Antriebsaggregat mittels einer Kraftübertragungseinrichtung (5) mit dem Vorderrad (14) für dessen Antrieb verbunden ist und die Kraftübertragungseinrichtung (5) einen hydrostatischen Antrieb aufweist, dessen Hydraulikpumpe (2) vom Antriebsmotor (1) des Antriebsaggregats angetrieben wird und dessen Hydraulikmotor (6) an einem Holm (Gabelholm 12) der Vordergabel angeordnet ist, **dadurch gekennzeichnet,** daß
eine Hydraulikpumpe (2) mit konstanter Förderleistung vorgesehen ist,
der Hydraulikmotor (6) die gleiche konstante Schluckleistung aufweist wie die Hydraulikpumpe (2),
die von der Hydraulikpumpe (2) geförderte Hydraulikflüssigkeit durch eine Öldruckleitung (8) über ein Druckregelventil (4) geleitet wird, das durch ein Verstellelement (Drehgriff 10) stufenlos auf ca. 20 bis 200 bar einstellbar ist, und
zwischen Öldruckleitung (8) zum Hydraulikmotor (6) und Rückleitung ein Freilauf- oder Rückschlagventil (7) vorgesehen ist, das ein Frei- oder Vorlaufen des Vorderrades ermöglicht, wobei das Vorderrad im Normalbetrieb 1 % bis 3 % langsamer läuft als das Hinterrad und sich der Hydraulikmotor (6) das zusätzliche Öl durch das Freilauf- oder Rückschlagventil (7) holt und bei einem Betrieb, bei dem das Hinterrad mehr als 1 % bis 3 % durchrutscht, sich das Ventil (7) schließt.

2. Motorrad nach Anspruch 1, dadurch gekennzeichnet, daß die Hydraulikpumpe (2) über ein Zwillingskettenrad (11) mit dem Antriebsaggregat oder dem Hinterrad (9) dauernd in Verbindung steht.

3. Motorrad nach Anspruch 1 oder 2, dadurch gekennzeichnet, daß der Antrieb der Hydraulikpumpe (2) über ein Kettenrad erfolgt, das auf der Kardanwelle angebracht ist.

4. Motorrad nach Anspruch 1 oder 2, dadurch gekennzeichnet, daß der Antrieb der Hydraulikpumpe (2) als Direktantrieb am Getriebe über ein Zahnrad erfolgt.

5. Motorrad nach einem der Ansprüche 1 bis 4, dadurch gekennzeichnet, daß der Hydraulikmotor (6) an einem Gabelholm (12) montiert und über eine Kette mit einem am Vorderrad (14) befestigten Kettenrad (13) verbunden ist und somit das Vorderrad (14) antreibt.

## Claims

1. A motorcycle having an unsteerable rear wheel (9), a drive unit having a driving motor (1) for driving the rear wheel (9), a steerable front wheel (14), the drive unit being connected with the front wheel (14) by a transmission device (5) for driving it, and the transmission device (5) having a hydrostatic drive whose hydraulic pump (2) is driven by the driving motor (1) of the drive unit and whose hydraulic motor (6) is disposed on an arm (fork arm 12) of the front fork, characterized in that
a hydraulic pump (2) with constant delivery is provided, the hydraulic motor (6) has the same constant intake as the hydraulic pump (2),
the hydraulic fluid delivered by the hydraulic pump (2) is conducted through an oil pressure line (8) via a pressure control valve (4) which is adjustable continuously to approx. 20 to 200 bars through an adjusting element (turning handle 10), and
a freewheel or check valve (7) is provided between the oil pressure line (8) to the hydraulic motor (6) and the return line to permit free or advance running of the front wheel, the front wheel running in normal operation 1% to 3% more slowly than the rear wheel and the hydraulic motor (6) getting the additional oil through the freewheel or check valve (7) and the valve (7) closing in operation where the rear wheel spins more than 1% to 3%.

2. The motorcycle of claim 1, characterized in that the hydraulic pump (2) is constantly connected with the drive unit or the rear wheel (9) via a twin chainwheel (11).

3. The motorcycle of claim 1 or 2, characterized in that the hydraulic pump (2) is driven via a chainwheel mounted on the cardan shaft.

4. The motorcycle of claim 1 or 2, characterized in that the hydraulic pump (2) is driven directly on the gear via a gearwheel.

5. The motorcycle of any of claims 1 to 4, characterized in that the hydraulic motor (6) is mounted on a fork arm (12) and connected via a chain with a chainwheel (13) fastened to the front wheel (14), thereby driving the front wheel (14).

## Revendications

1. Motocyclette comportant une roue arrière non orientable (9), un groupe moteur comprenant un moteur de commande (1) entraînant la roue arrière (9), une roue avant de direction (14), le groupe moteur étant connecté à la roue avant (14), aux fins de son entraînement, par un dispositif de transmission (5), et le dispositif de transmission (5) comprenant une commande hydrostatique dont la pompe hydraulique (2) est commandée par le moteur de commande (1) du groupe moteur et dont le moteur hydraulique (6) est disposé sur un montant (12) de la fourche avant,
**caractérisée en ce que**
- une pompe hydraulique (2) à débit constant est prévue,
- le moteur hydraulique (6) présente le même débit de consommation constant de la pompe hydraulique (2),
- le fluide hydraulique refoulé par la pompe hydraulique (2) est amené dans une conduite à pression d'huile (8) par l'intermédiaire d'une soupape régulatrice de pression (4) réglable de façon continue d'approx. 20 jusqu'à 200 bar, au moyen d'un élément de réglage (poignée tournante 10), et
- une soupape de retenue ou de roue libre (7) permettant la course libre de la roue avant est prévue entre la conduite à pression d'huile (8) amenant au moteur hydraulique (6) et la conduite de retour, la roue avant, en fonctionnement normal, roulant plus lentement de 1 % à 3 % par rapport à la roue arrière et le moteur hydraulique (6) tirant l'huile supplémentaire à travers la soupape de retenue ou de roue libre (7), et la soupape (7) se fermant en fonctionnement avec la roue arrière patinant de plus de 1 % à 3 %.

2. Motocyclette selon la revendication 1, **caractérisée en ce que** la pompe hydraulique (2) est connectée, de façon continue, au groupe moteur ou à la roue arrière (9) par l'intermédiaire d'une roue dentée (11).

3. Motocyclette selon les revendications 1 ou 2, **caractérisée en ce que** la commande de la pompe hydraulique (2) est effectuée par l'intermédiaire d'une roue dentée supportée par l'arbre de transmission.

4. Motocyclette selon les revendications 1 ou 2, **caractérisée en ce que** la commande de la pompe hydraulique (2) est effectuée en commande directe de l'engrenage par une roue dentée.

5. Motocyclette selon l'une des revendications précédentes, **caractérisée en ce que** le moteur hydraulique (6) est monté sur un montant (12) de la fourche avant et est connectée par une chaîne à une roue dentée (13) attachée à la roue avant (14) de façon à entraîner la roue avant (14).
